# EUROPEAN PATENT SPECIFICATION

(11) **EP 1 606 202 B1**
(45) Date of publication and mention of the grant of the patent: **14.10.2009**
(21) Application number: 04716070.0
(22) Date of filing: 01.03.2004
(51) Int. Cl.: B65G 63/00

(54) **SYSTEM AND METHOD FOR THE STORAGE AND TRANSPORT OF SEA CONTAINERS**
SYSTEM UND VERFAHREN ZUR LAGERUNG UND ZUM TRANSPORT VON CONTAINERN
SYSTEME ET METHODE DE STOCKAGE ET DE TRANSPORT DE CONTENEURS MARITIMES

(30) Priority: 28.02.2003 NL 1022811
(43) Date of publication of application: 21.12.2005
(73) Proprietor: Fountain Patents B.V. i.o., 2909 LC Capelle a/d IJssel (NL)
(72) Inventor: HOOGLAND, Hendricus, Antonius, NL-1562 ZM Krommenie (NL)
(74) Representative: Winckels, Johannes Hubertus F.
(86) International application number: PCT/NL2004/000152
(87) International publication number: WO 2004/076321

(56) References cited:
- WO-A-02/092473
- DE-A- 19 740 557
- DE-A- 19 823 601
- US-A- 5 421 688
- US-A- 5 707 199

## Description

The invention relates to a system for storing and transporting containers.

It is known to temporarily store sea containers in so-called stacks on a quay while awaiting further transport, the containers being arranged in rows next to each other and on top of each other. As a rule, these stacks are subdivided in lanes of some containers wide and some layer high, along which gantries can move for placing and removing containers. At the beginning and/or end of each lane, the containers can be transferred between the bridge crane and a further means of transport, for instance an AGV (Automatic guided vehicle) effecting transport of the containers between the stack and a place of loading or unloading.

This known storage system has various drawbacks. For instance, taking out a container from a stack often requires considerable effort (expressed in numbers of crane movements), particularly when the respective container is located at the bottom of the stack and, consequently, all containers located above it have to be moved first. In order to reduce the maximum number of operations required, in practice, the maximum stacking height of one stack is restricted, generally to three to four layers. However, this means that with a particular desired storage capacity, the surface of the stack will be large. This is expensive. Furthermore, all this leads to long supply and discharge routes. Further, with this known system, each time, only one container at the time can be taken up from a lane, which can lead to considerable waiting times when, per load, several containers are to be taken from a same lane. Furthermore, when transferring between the bridge crane and the AGV, undesirable waiting times can arise, among others in that the bridge crane has to wait until an AGV becomes available. Moreover, waiting times can arise in that, as a rule, the containers are to be supplied in a particular order to a loading location, in order for the vehicle, in particular the ship, to be loaded in a balanced manner. As a result, it can happen that a bridge crane of a particularly lane can only transfer its container to an AGV after containers from other lanes have passed. All this time the respective bridge crane is forced to be at a standstill. It will be clear that all this leads to reduced through-put rates.

From US 5707199 a system for storage and transport of containers from and to a loading or unloading location is known, comprising a series of container cells each provided with a series of container arrangement positions and circulating means for moving containers between an input position and a position for release and to container arrangement positions located there between. Container arrangement positions are provided above and next to each other.

The object of the invention is to provide a system for storage and transport of containers, wherein drawbacks of the known storage systems are obviated, while maintaining the advantages thereof. To that end, a system according to the invention is characterized by the features of claim 1.

With a system according to the invention, waiting times can be minimized and run-through times can be accelerated due to the use of circulating container cells in combination with a central assembly point. Due to the circulating container cells, a large number of containers can be taken up from their respective arrangement positions and, via the transport paths, be guided to the central assembly point in random order, without the different container cells needing to wait for each other, as is the case in the known systems. Having arrived at the assembly point, the containers can then be discharged in a desired order, by selectively taking out containers assembled at the assembly point. This too can take place without appreciable waiting times, as, due to the simultaneous supply, all necessary containers will reach the assembly point within a particular, relatively small, time margin. Thus, a great through-put can be achieved.

In a further elaboration, the system according to the invention comprises the features of claim 2.

What is achieved by selecting the location of the central assembly point to be such that the length of the transport paths from this central assembly point to the container cells is substantially equal for at least a large number of these cells, is that the time of travel of the containers between the container cells and the assembly point will also greatly coincide. In other words, the difference in time between the shortest possible and longest possible time of travel will be relatively small so that containers, reclaimed at the same time will reach the central assembly point approximately simultaneously. As a result, long waiting times at the assembly point can be avoided as well as a large storage capacity required to that end.

In a particularly advantageous embodiment comprising the features of claim 3, the transport of containers between the container cells and the central assembly point proceeds via the dedicated transport paths, with which for each container cell or group of container cells (such as a container rack to be further discussed hereinafter) a transport path is reserved for supply and discharge of containers from or to the central assembly point, respectively. What is better prevented in this manner, when containers are discharged, is that container cells or groups of cells have to wait for each other, so that waiting times and congestions can be avoided, at least be limited to a minimum.

In that case, the central assembly point can be arranged as a junction of converging dedicated transport paths and at least one central discharge path which connects the assembly point with a loading and/or unloading location. Further, preferably, removal means are provided with which containers can be selectively removed from the different dedicated transport paths converging at the junction, and be placed on the central discharge path in a desired order. The above-mentioned description holds when the system is used for loading means of transport, in particular ships. When unloading and then storing containers in the different container cells, the central assembly point can function as a distribution centre from which containers, supplied via the one discharge path, can be distributed over the different dedicated transport paths for further transport in the direction of a container cell with an arrangement position to which the respective container is assigned.

Preferably, the containers cells are designed as described in the Dutch patent NL 1018061 C of applicant. With such container cells, when the container arrangement positions are placed at an inclination, gravity is used in an advantageous manner for circulating the containers, so that relatively simple hoisting means can suffice. As a result, from a point of view of cost price, a storage system equipped with such container cells can compete with the earlier described, known storage systems which make use of bridge cranes.

By grouping the container cells in rows next to and on top of each other in containers racks, space can be saved in that connecting routes, in particular dedicated transport paths can be combined for common use and in that relatively large numbers of containers can be stacked on top of each other. The fact is that, due to the use of circulating container cells, per rack as many containers as there are cells can be directed simultaneously to a position for release. It is true that containers located in higher layers then need to be brought down, which will take up some time, but this time is significantly shorter than the time the known system needs for moving containers located higher up. Moreover, with the known system, several containers from one stack lane cannot be handled simultaneously. Therefore, with racks according to the invention, the height plays a far less restrictive part and therefore, higher stacking is possible. As a result, the storage capacity of the system can be increased considerably while the surface remains the same, or, the surface can be reduced while the capacity remains the same.

In a further advantageous embodiment, the container cells can be mutually coupled via horizontal and/or vertical transfer means so that a container can be guided to, for instance, the position for release of an adjoining cell because its own cell is temporarily out of use, or, can be moved, for instance, upwards or downwards in a vertical column, so that external hoisting means can be omitted.

In a particularly advantageous embodiment, the system according to the invention comprises the features of claim 7.

In such a layout, passageways between the container racks can be designed so as to be dedicated transport paths, on which, with the aid of suitable transfer means, containers can be placed from container cells stacked on both sides of these passageways. The container cells are then orientated in the racks such that their positions for release adjoin the passageways. In their turn, the passageways merge into a main transport artery, while the dedicated transport paths proceed as a bundle of adjoining paths terminating approximately halfway the transport artery in the central assembly point. Due to the central location of the assembly point, relatively short connecting routes can be realised, a relatively large number of which having, moreover, approximately the same length.

In a further advantageous embodiment, identifying the containers, assigning a suitable container arrangement position, determining a desired supply and discharge order and, on the basis thereof, controlling the different transport paths and transfer means can be carried out in a fully automated manner by means of a suitable logistic algorithm, implemented in a central control unit. Preferably, communication means are then provided for passing on loading and discharge commands to be expected so that they can be anticipated in time when determining a most optimal storage strategy.

The invention further relates to a method for storing and transporting containers while using a system according to be invention, according to claim 12 or claim 13.

In a particularly advantageous embodiment, a method according to the invention comprises the features of claim 14.

With such a method, containers with, for instance, perishable goods and, therefore, needing rapid processing, can be assigned a location in a zone located at a relatively short distance from the central assembly point, while a container with less urgency, for instance an empty container, can be assigned an arrangement position at a relatively great distance from the central assembly point. Naturally, different zones can be coupled to different storage rates.

In the further subclaims, further advantageous embodiments of a system and a method according to the invention are described.

In clarification of the invention, an exemplary embodiment of a system according to the invention and the use thereof will be further elucidated with reference to the drawing. In the drawing, the one Figure schematically shows, in top plan view, a layout of a system according to the invention, used in a harbor terminal, for the storage and transport of sea containers. It is noted that a storage system according to the invention is not limited to use in harbor areas per se, but can be used in any logistic distribution centre in which containers are transferred between different transport means.

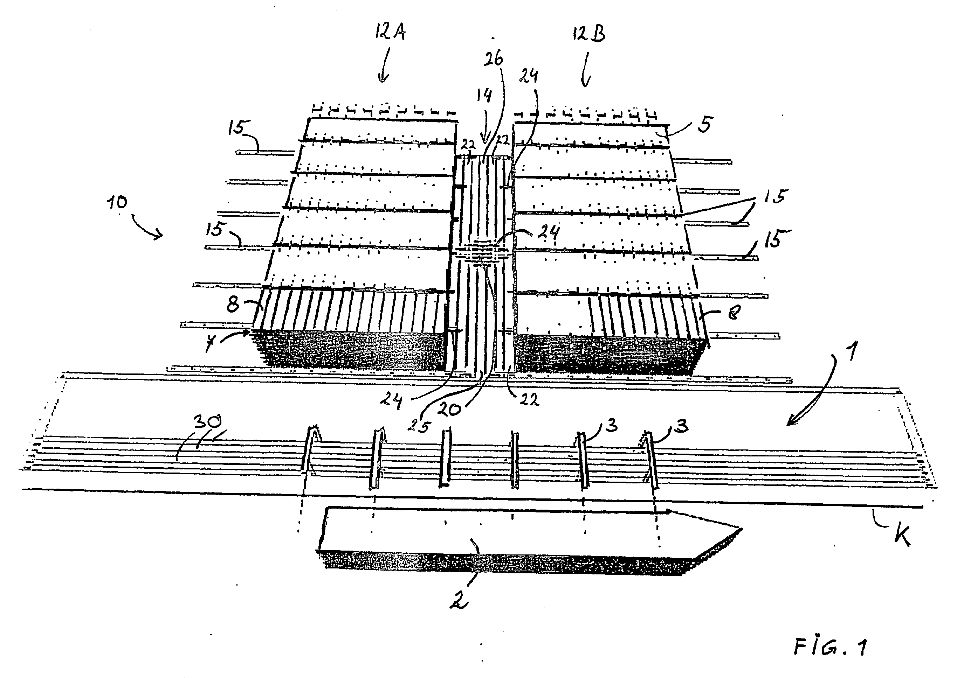

Figure 1 schematically shows, in perspective top plan view, a harbor terminal provided with a quay 1, to which a ship 2 is moored, which, with the aid of quay cranes 3 positioned on the quay, can be unloaded or loaded with (sea)containers with the aid of a system 10 according to the invention. In the present case, this system 10 comprises twelve container racks 5, arranged slightly further inland on the quay 1, with their longitudinal direction extending substantially parallel to the quay line K. The container racks 5 are arranged in two rows 12A, B of six racks 5 each, extending substantially at right angles to the quay line K. Between the two rows 12A,B, a main transport artery 14 is provided extending substantially at right angles to the quay line K, while between the container racks 5 in the rows 12A,B passage ways 15 are provided, extending as far as the main transport artery 14, substantially at right angles thereto.

The passageways 15 and the main transport artery 14 can be designed as, for instance, driven transport paths such as, for instance, a roller belt or conveyor belt, but can also be provided, for instance, at a slight inclination, so that containers, placed on the belts are moved forward under the influence of gravity. Instead thereof or in addition thereto, the paths 15, 14 can be provided with guiding rails with guided transport trolleys therein, or be driven by other suitable transport means, such as, for instance, AGVs.

Each container rack 5 is provided with a number of rows 7 of container cells 8 placed one above the other. In the exemplary embodiment shown each rack 5 comprises twelve rows 7 stacked on top of each other and each row 7 comprises eighteen container cells 8 placed next to each other. These container cells 8 can for instance (but not per se) be designed as described in NL 101 8061 C of applicant, and will, in the following, not be discussed further than is required for a good understanding of the present invention. For a detailed description, reference is made to the application mentioned.

The container cells 8 are each provided with an input position, via which containers can be inserted into the cell 8, a position for release via which containers can be removed from the cell 8 and a series of container arrangement positions for storing containers. These container arrangement positions extend in two substantially parallel rows, while the input position and the position for release can be located adjacent one end of these rows or at both ends. Further, the cell is provided with suitable transport means with which the containers can be moved along the different arrangement positions in a circulating movement. As a result, each container can be manipulated from an input position to the position for release and any desired arrangement position located therebetween. In an advantageous embodiment, between adjoining container cells 8, similar transport means can be provided so that the circulating movement needs not be limited within one cell 8 but can extend over several cells 8 within one container rack 5. In a further advantageous embodiment, use is made of gravity for circulating the containers, by placing the rows of arrangement positions at a slight inclination, as described in the earlier mentioned patent publication. As a result, a relatively inexpensive circulating system can be obtained in which the containers can be manipulated with minimum energy. A further advantage of the container cells 8 according to NL 1018061 C is that its use of space is highly efficient in that theoretically, only one surface of the size of one arrangement position needs to be left clear in order to realize the intended circulation.

The orientation of the container cells 8 in the container racks 5 shown in Fig. 1 is such that the position for release and input position thereof adjoin the passageways 15. In the exemplary embodiment shown, this means that the longitudinal direction of the rows of container arrangement positions extends substantially at right angles to the longitudinal direction of the passageways 15.

System 10 further comprises a central assembly point 20, extending in the embodiment shown in Fig. 1 in the main transport artery 14, approximately halfway the rows 12A,B of the container racks 5. In the exemplary embodiment shown, the main transport artery 14 comprises seven dedicated transport paths 22 located next to each other, the six outermost located paths 22 of which are in communication, via transfer means 24 shown very schematically, with similar transport paths of passageways 15. The middle transport path is used as a central discharge path 25 for the central assembly point 20. In the exemplary embodiment shown, this central assembly point 20 is in fact nothing but a junction where all dedicated transport paths 22 converge. The assembly point 20 is provided with transfer means 24, with which containers can be taken from the different dedicated transport paths 22 and be guided onto the central discharge path 25, or vice versa.

Naturally, this central assembly point 20 can be designed in many other ways, for instance as the container cell 8, while the input position is connected to the transport paths 22 coming from the different racks 5, and the position for release can be connected to the central discharge path 25, which extends in the direction of the quay cranes 3. Through circulation of incoming containers along the position for release, each time, any desired container can be supplied to the position for release in any desired order to be discharged to the quay. Further, the central assembly point 20 can be provided with a central discharge path 26 extending inland for loading land transport means such as trucks or trains. For that purpose, on the side of the racks 5 remote from the quay line K, a similar sorting centre can be arranged. Naturally, a system 10 according to the invention can also be provided with several central assembly points 20, one of which being located, for instance, adjacent the quay and one adjacent a side of the system facing inland.

The system 10 as described with reference to Fig. 1 can be used as follows for unloading containers from a moored ship 2. After being taken from the ship by quay cranes 3, the containers are moved via dedicated transport paths 30 to the central discharge path 25. There, or already during unloading, the containers are identified by means of suitable scanning means and, with the aid of a central control unit, are assigned a container arrangement position, while both the history of the container and the expected future intended use thereof can be taken into account. Then, the container is guided to the central assembly point 20, which, then, functions as distribution center and, with the aid of the transfer means 24, leads the container to the correct dedicated transport path 22, which, in turn, leads to the correct passageway 15. Then, the container is halted in front of the desired column of container cells 8 located on top of each other, is hoisted with the aid of suitable hoisting means to the intended container cell 8 and, via the input position, brought into the cell 8, whereupon the container, via the above-described circulating movement is brought to its eventual arrangement position.

When loading a ship 2 or other means of transport the process proceeds in a more or less similar manner but in reverse order. As soon as a ship to be loaded reports (which, preferably, happens before the ship actually moors so that during mooring, already a part of the containers can be ready) and passes on the desired loading scheme, the central control system verifies at which container arrangement position the desired containers are located. Then, the relevant container cells 8, associated with these arrangement positions, are activated for circulating the respective container in the direction of the position for release. From there, the container is guided via the dedicated transport paths 15, 22 to the central assembly point, where already a part of the other desired containers will have arrived. The central control system then controls the transfer means 24, for, each time, taking from the different paths 22 and placing in the central discharge path 25 that specific container whose turn it is according to the loading scheme. Via the discharge path 25, the containers put in order accordingly are guided to the dedicated paths 30 of the quay cranes 3 and placed into the ship 2.

It will be clear that loading and unloading in the above-described manner can be done in a fully automated manner with the aid of the central control system.

A system 10 according to the invention offers the advantage that a large number of containers can be handled simultaneously, so that waiting times can be prevented, at least minimized, and the through-put and transfer capacity can be increased. Moreover, it becomes possible to stack higher than in the known systems without the retrieval times required for taking up containers increasing in an unacceptable manner. As a result, when the storage capacity remains the same, the required built-up surface can be considerably reduced, which can yield a great cost savings since square meters are scarce in harbors and, therefore, expensive. Through a suitable layout, i.e. choice of mutual positioning of the container racks 5, the central assembly point 20 and the unloading and loading locations, transport routes and associated passage times can be reduced. Moreover, through a clever set-up of the racks, the efficiency of use can be further optimized, for instance by positioning containers that are stored longer, for instance empty containers, at a greater distance from the central assembly point 20 and/or on the uppermost layers of the racks 5 with the longest hoisting times. Also, a different storage rate can be coupled to the different arrangement positions in the container cells 8, depending on their distance to the central assembly point 20.

The invention is not limited in any manner to the exemplary embodiment presented in the description and the drawing. Many variations thereon are possible within the scope of the invention, which is defined by the appended claims.

For instance, the container racks 5 and passageways 15 located therebetween can be placed radially with respect to a central assembly point 20. As a result, each time, ring-shaped zones can be indicated, wherein the container cells 8 are located substantially at a similar distance from the central assembly point 20 and, as a consequence, the transport routes and associated transport times will be of, substantially, the same length.

What can further be varied are, among others, the number of container racks 5, the number of container cells 8 per rack 5 (in particular the height and length of the racks 5), the number of container arrangement positions per container cell 8 and the location of the central assembly point 20, for influencing, amongst others, the storage capacity, the ground surface required thereto, the circulation time of the container cells 8 and, number and length of the supply and discharge routes, the required through-put time per container, the through-put rate and the transfer capacity of the system 10. these and many variations are understood to fall within the scope of the invention as defined by the appended claims.

## Claims

1. A system (10) for storage and transport of (sea)containers from and to a loading and/or unloading location, comprising:
- a location for loading and/or unloading containers;
- a series of container cells (8), each cell (8) comprising:
- an input position via which containers can be inserted into the cell(8);
- a position for release via which containers can be removed from the cell(8);
- two substantially parallel rows of container arrangement positions for storing containers, the container arrangement positions being located between the input position and the position for release, the input position and the position for release being located adjacent one end of these rows or at both ends;
- circulating means for moving containers, in a circulating movement between an input position, a position for release and the container arrangement positions;
- a plurality of racks (5), each rack comprising rows (7) of container cells (8) placed on top of each other;
- a central assembly point (20) provided with a series of container arrangement positions ;
- a series of discrete transport paths (14, 15, 22, 25) which connect the container cells (8), at least their positions for release, with the central assembly point (20) and connect the central assembly point (20) with the loading and/or unloading location; wherein said input position and position for release of said container cells (8) adjoin a discrete transport path (15), and wherein said central assembly point (20) comprises means for distributing containers over the different discrete transport paths (22).

2. A system (10) according to claim 1, wherein the container cells (8) are grouped with respect to the central assembly point (20) such that, for a relatively large number of these container cells (8), the length of the transport paths between the input position and position for release of the container cells (8) and a central assembly point (20) is substantially equal and preferably as short as possible.

3. A system (10) according to claim 1 or 2, wherein the dedicated transport paths connect, each time, one input position and/or position for release of a container cell (8) with the central assembly point (20).

4. A system (10) according to anyone of the preceding claims, wherein the central assembly point (20) comprises sorting provisions for placing containers supplied from the unloading location and/ or the container cells (8) in a desired order.

5. A system (10) according to claim 3 or 4, wherein the central assembly point (20) is a junction of converging dedicated transport paths (15, 22, 25), while transfer or removal means are provided for selectively removing containers from the different dedicated transport paths (15, 22, 25) and placing them on a central discharge path (25) in a desired order.

6. A system (10) according to any one of the preceding claims, wherein the rows of arrangement positions are at a slight inclination, such that for circulating the containers use is made of gravity.

7. A system (10) according to any one of claims 1-6, wherein at least one pair of container racks (5) is disposed next to each other in longitudinal direction, wherein the longitudinal direction extends substantially parallel to a quay (K) and the central assembly point (20) is located between the end sides of the container racks (5) facing each other.

8. A system (10) according to claim 7, wherein several pairs of container racks (5) are positioned on a quay one behind the other, i.e, with their longitudinal sides facing each other, while, each time, between two adjoining pairs a passageway (15) extends, substantially parallel to the quay (K), while each passageway (15) connects to a main transport artery which extends substantially at right angles to the quay (K), between the end sides of the container racks (5) facing each other, while the central assembly point (20) is situated in the main transport artery (14), preferably approximately halfway this main transport artery (14).

9. A system (10) according to anyone of claims 1-8, wherein a container rack (5) comprises more than four layers of container cells (8), in particular more than six layers of container cells (8) and preferably more than ten layers of container cells (8).

10. A system (10) according to any one of claims 1-6, wherein the container racks (5) extend radially with respect to the central assembly point (20), with passageways (15) located between adjoining container racks (5) which passage ways (15) also extend radially from the central assembly point (20).

11. A system (10) according to anyone of the preceding claims, wherein a central control unit is provided for controlling all system parts involved in loading and unloading the containers, so that, preferably, the loading and unloading process can take place in a fully automated manner.

12. A method for loading/unloading (sea)containers using a system (10) according to anyone of the preceding claims, comprising the steps:
A. identifying a container to be loaded, in particular its container arrangement position in the system (10);
B. circulating the respective container cell (8), until the respective container is in a position for release;
C. transporting the container from the container cell (8) to a central assembly point (20);
D. putting in order containers which enter at the central assembly point (20);
E. discharging containers in order, from the central assembly point (20) to a loading location;
wherein all steps, in particular the steps A up to and including C, can be carried out simultaneously.

13. A method for loading/unloading (sea)containers using a system (10) according to anyone of claims 1 - 11, wherein an unloaded container is identified and has an intended container arrangement position assigned to it, whereupon the steps according to claim 12 are proceeded in reverse order, wherein in particular the container is transported to the central assembly point (20), is put, if so desired, in order, is transported to an input position of the intended container cell (8) and is then circulated within this container cell (8) to the intended container arrangement position.

14. A method according to claim 12 or 13, wherein the system (10) is divided in zones with a substantially equally long connecting route on the basis of the length of the connecting routes between the central assembly point (20) and the different container arrangement positions, wherein assignment of an arrangement position to an arriving container is carried out on the basis of, among others, these zones.

## Patentansprüche

1. System (10) zur Lagerung und zum Transport von (See-) Containern von und zu einem Lade- und/oder Entladesystem, mit:
- einer Stelle zum Laden und/oder Entladen von Containern;
- einer Reihe von Container-Zellen (8), wobei jede Zelle (8) aufweist:
- eine Einführungsposition, über die Container in die Zelle (8) eingeführt werden können;
- eine Freigabeposition, über die Container aus der Zelle (8) entfernt werden können;
- zwei im Wesentlichen parallelen Reihen von Container-Anordnungspositionen zum Lagern von Containern, wobei die Container-Anordnungspositionen zwischen der Einführungsposition und der Freigabeposition angeordnet sind, wobei die Einführungsposition und die Freigabeposition an einem Ende dieser Reihen oder an beiden Enden angeordnet sind;
- Umlaufvorrichtungen, um die Container in einer Umlaufbewegung zwischen einer Eingabeposition, einer Freigabeposition und den Container-Anordnungspositionen zu bewegen;
- mehreren Gestellen (5), wobei jedes Gestell übereinander angeordnete Reihen (7) von Container-Zellen (8) aufweist;
- einem zentralen Zusammenstellungspunkt (20), der eine Reihe von Container-Anordnungspositionen aufweist;
- einer Reihe diskreter Transportwege (14,15,22,25), welche die Container-Zellen (8) mindestens an ihren Freigabepositionen mit dem zentralen Zusammenstellungspunkt (20) verbinden und den zentralen Zusammenstellungspunkt (20) mit der Lade- und/oder EntladeStelle verbinden, wobei die Eingabeposition und die Freigabeposition der Container-Zellen (8) an einen diskreten Transportweg (15) angrenzen und wobei der zentrale Zusammenstellungspunkt (20) Vorrichtungen zum Verteilen von Containern auf die verschiedenen diskreten Transportwege (22) aufweist.

2. System (10) nach Anspruch 1, bei dem die Container-Zellen (8) in Bezug auf den zentralen Zusammenstellungspunkt (20) derart gruppiert sind, dass für eine relativ große Anzahl dieser Container-Zellen (8) die Länge der Transportwege zwischen der Eingabeposition und der Freigabeposition der Container-Zellen (8) und einem zentralen Zusammenstellungspunkt (20) im Wesentlichen gleich und vorzugsweise so kurz wie möglich ist.

3. System (10) nach Anspruch 1 oder 2, bei dem die zugewiesenen Transportwege jeweils eine Eingabeposition und/oder Freigabeposition einer Container-Zelle (8) mit dem zentralen Zusammenstellungspunkt (20) verbinden.

4. System (10) nach einem der vorhergehenden Ansprüche, bei dem der zentrale Zusammenstellungspunkt (20) Sortier-Vorkehrungen aufweist, um von der Entladestelle und/oder den Container-Zellen (8) her zugeführte Container in einer gewünschten Reihenfolge zu platzieren.

5. System nach Anspruch 3 oder 4, bei dem der zentrale Zusammenstellungspunkt (20) ein Knotenpunkt konvergierender zugewiesener Transportwege (15,22,25) ist, wobei Transfer- oder Entfernungsvorrichtungen vorgesehen sind, um selektiv Container aus den verschiedenen zugewiesenen Transportwegen (15,22,25) zu entnehmen und sie in einer gewünschten Reihenfolge auf einem zentralen Ausgabeweg (25) zu platzieren.

6. System (10) nach einem der vorhergehenden Ansprüche, bei dem die Reihen von Anordnungspositionen eine leichte Schrägstellung derart aufweisen, dass für den Umlauf der Container die Schwerkraft genutzt wird.

7. System (10) nach einem der Ansprüche 1-6, bei dem mindestens ein Paar von Container-Gestellen (5) in Längsrichtung nebeneinander angeordnet ist, wobei die Längsrichtung im Wesentlichen parallel zu einer Andockstelle (K) verläuft und der zentrale Zusammenstellungspunkt (20) zwischen den einander gegenüberliegenden Endseiten der Container-Gestelle (5) angeordnet ist.

8. System (10) nach Anspruch 7, bei dem mehrere Paare von Container-Gestellen (5) an einer Andockstelle hintereinander, d.h. mit einander zugewandten Längsseiten, angeordnet sind, wobei jeweils zwischen zwei benachbarten Paaren ein Durchlass (15) im Wesentlichen parallel zu der Andockstelle (K) verläuft, wobei jeder Durchlass (15) mit einer Haupttransportarterie verbunden ist, die im Wesentlichen rechtwinklig zu der Andockstelle (K) zwischen den einander gegenüberliegenden Endseiten der Container-Gestelle (5) verläuft, wobei die zentrale Zusammenstellungspunkt (20) in der Haupttransportarterie (14) vorzugsweise auf halber Strecke dieser Haupttransportarterie (14) angeordnet ist.

9. System (10) nach einem der Ansprüche 1-8, bei dem ein Container-Gestell (5) mehr als vier Lagen von Container-Zellen (8), insbesondere mehr als sechs Lagen von Container-Zellen (8) und vorzugsweise mehr als zehn Lagen von Container-Zellen (8) aufweist.

10. System (10) nach einem der Ansprüche 1-6, bei dem die Container-Gestelle (5) in Bezug auf den zentralen Zusammenstellungspunkt (20) radial verlaufen, wobei zwischen einander angrenzenden Container-Gestellen (5) Durchlässe (15) angeordnet sind und diese Durchlässe (15) ebenfalls in Bezug auf den zentralen Zusammenstellungspunkt (20) radial verlaufen.

11. System (10) nach einem der vorhergehenden Ansprüche, bei dem eine zentrale Steuereinheit vorgesehen ist, um sämtliche beim Laden und Entladen der Container involvierten Systemteile zu steuern, so dass der Lade- und Entladevorgang vorzugsweise vollautomatisch erfolgen kann.

12. Verfahren zum Laden/Entladen von (See-) Containern unter Verwendung eines Systems (10) nach einem der vorhergehenden Ansprüche, mit den Schritten:
A. Identifizieren eines zu ladenden Containers, insbesondere von dessen Container-Anordnungsposition in dem System (10);
B. Umlaufenlassen des betreffenden Containers (8), bis der betreffende Container sich in einer Position zur Freigabe befindet;
C. Transportieren des Containers aus der Container-Zelle (8) zu einem zentralen Zusammenstellungspunkt (20);
D. Anordnen der an dem zentralen Zusammenstellungspunkt (20) eintretenden Container in einer Reihenfolge;
E. reihenfolgegemäßes Ausgeben der Container aus dem zentralen Zusammenstellungspunkt (20) zu einer Ladestelle;
wobei sämtliche Schritte, insbesondere die Schritte A bis einschließlich C, gleichzeitig ausgeführt werden können.

13. Verfahren zum Laden/Entladen von (See-) Containern unter Verwendung eines Systems (10) nach einem der Ansprüche 1-11, bei dem ein ungeladener Container identifiziert wird und ihm eine gewünschte Container-Anordnungsposition zugewiesen wird, woraufhin

## Revendications

1. Système (10) pour le stockage et le transport de conteneurs (maritimes) de et vers un emplacement de chargement et/ou de déchargement, comprenant :
- un emplacement pour charger et/ou décharger des conteneurs ;
- une série de compartiments de conteneur (8), chaque compartiment (8) comprenant :
- une position d'entrée via laquelle les conteneurs peuvent être insérés dans le compartiment (8) ;
- une position pour la libération via laquelle les conteneurs peuvent être libérés du compartiment (8) ;
- deux rangées sensiblement parallèles de positions d'agencement de conteneur pour stocker des conteneurs, les positions d'agencement de conteneur étant situées entre la position d'entrée et la position pour la libération, la position d'entrée et la position pour la libération étant situées de manière adjacente à une extrémité de ces rangées ou au niveau des deux extrémités ;
- des moyens de circulation pour déplacer les conteneurs, selon un mouvement de circulation entre une position d'entrée, une position pour la libération et les positions d'agencement de conteneur ;
- une pluralité d'étagères (5), chaque étagère comprenant des rangées (7) de compartiments de conteneur (8) placées les unes sur les autres ;
- un point d'assemblage central (20) prévu avec une série de positions d'agencement de conteneur ;
- une série de trajectoires de transport distinctes (14, 15, 22, 25) qui raccorde les compartiments de conteneur (8), au moins leurs positions pour la libération, avec le point d'assemblage central (20) et raccorde le point d'assemblage central (20) avec l'emplacement de chargement et/ou déchargement ; dans lequel ladite position d'entrée et la position pour la libération desdits compartiments de conteneur (8) sont attenantes à une trajectoire de transport distincte (15) et dans lequel ledit point d'assemblage central (20) comprend des moyens pour répartir les conteneurs sur les différentes trajectoires de transport distinctes (22).

2. Système (10) selon la revendication 1, dans lequel les compartiments de conteneur (8) sont groupés par rapport au point d'assemblage central (20) de sorte que, pour un nombre relativement important de ces compartiments de conteneur (8), la longueur des trajectoires de transport entre la position d'entrée et la position pour la libération des compartiments de conteneur (8) et un point d'assemblage central (20) est sensiblement égale et de préférence aussi courte que possible.

3. Système (10) selon la revendication 1 ou 2, dans lequel les trajectoires de transport dédiées raccordent, chaque fois, une position d'entrée et/ou une position pour la libération d'un compartiment de conteneur (8) avec le point d'assemblage central (20).

4. Système (10) selon l'une quelconque des revendications précédentes, dans lequel le point d'assemblage central (20) comprend des dispositions de tri pour placer les conteneurs alimentés depuis l'emplacement de déchargement et/ou les compartiments de conteneur (8) dans un ordre souhaité.

5. Système (10) selon la revendication 3 ou 4, dans lequel le point d'assemblage central (20) est une jonction pour faire converger les trajectoires de transport dédiées (15, 22, 25) alors que des moyens de transfert ou de retrait sont prévus pour retirer sélectivement les conteneurs des différentes trajectoires de transport dédiées (15, 22, 25) et les placer sur une trajectoire de décharge centrale (25) dans un ordre souhaité.

6. Système (10) selon l'une quelconque des revendications précédentes, dans lequel les rangées des positions d'agencement sont légèrement inclinées, de sorte que pour faire circuler les conteneurs, on utilise la gravité.

7. Système (10) selon l'une quelconque des revendications 1 à 6, dans lequel au moins une paire d'étagères de conteneur (5) sont disposées l'une après l'autre dans la direction longitudinale, dans lequel la direction longitudinale s'étend sensiblement parallèlement à un quai (K) et le point d'assemblage central (20) est situé entre les côtés d'extrémité des étagères de conteneur (5) se faisant face.

8. Système (10) selon la revendication 7, dans lequel plusieurs paires d'étagères de conteneur (5) sont positionnées sur un quai les unes derrière les autres, c'est-à-dire avec leurs côtés longitudinaux se faisant face, alors que, chaque fois, entre deux paires attenantes, une voie de passage (15) s'étend, sensiblement parallèlement au quai (K), alors que chaque voie de passage (15) se raccorde à une artère de transport principale qui s'étend sensiblement en angle droit par rapport au quai (K) entre les côtés d'extrémité des étagères de conteneur (5) se faisant face, alors que le point d'assemblage central (20) est situé dans l'artère de transport principale (14), de préférence approximativement à mi-chemin de cette artère de transport principale (14).

9. Système (10) selon l'une quelconque des revendications 1 à 8, dans lequel une étagère de conteneur (5) comprend plus de quatre couches de compartiments de conteneur (8), en particulier plus de six couches de compartiments de conteneur (8) et de préférence plus de dix couches de compartiments de conteneur (8).

10. Système (10) selon l'une quelconque des revendications 1 à 6, dans lequel les étagères de conteneur (5) s'étendent radialement par rapport au point d'assemblage central (20), avec des voies de passage (15) situées entre les étagères de conteneur (5) attenantes, lesquelles voies de passage (15) s'étendent également radialement à partir du point d'assemblage central (20).

11. Système (10) selon l'une quelconque des revendications précédentes, dans lequel une unité de contrôle centrale est prévue pour contrôler toutes les parties de système impliquées dans le chargement et le déchargement des conteneurs, de sorte que de préférence le procédé de chargement et de déchargement peut avoir lieu d'une manière complètement automatisée.

12. Procédé pour charger / décharger des conteneurs (maritimes) en utilisant un système (10) selon l'une quelconque des revendications précédentes, comprenant les étapes consistant à :
A. identifier un conteneur à charger, en particulier sa position d'agencement de conteneur dans le système (10) ;
B. faire circuler le compartiment de conteneur (8) respectif, jusqu'à ce que le conteneur respectif soit dans une position pour la libération ;
C. transporter le conteneur du compartiment de conteneur (8) jusqu'à un point d'assemblage central (20) ;
D. mettre en ordre les conteneurs qui entrent au niveau du point d'assemblage central (20) ;
E. décharger les conteneurs dans l'ordre, du point d'assemblage central (20) à un emplacement de chargement ;
dans lequel toutes les étapes, en particulier les étapes A jusqu'à et comprenant l'étape C, peuvent être réalisées simultanément.

13. Procédé pour charger / décharger des conteneurs (maritimes) en utilisant un système (10) selon l'une quelconque des revendications 1 à 11, dans lequel un conteneur déchargé est identifié et a une position d'agencement de conteneur prévue qui lui est attribuée, suite à quoi les étapes selon la revendication 12 sont réalisées dans l'ordre inverse, dans lequel en particulier, le conteneur est transporté jusqu'au point d'assemblage central (20), est placé, si nécessaire, dans l'ordre, est transporté jusqu'à une position d'entrée du compartiment de conteneur (8) prévu et circule ensuite à l'intérieur de ce compartiment de conteneur (8) jusqu'à la position d'agencement de conteneur prévue.

14. Procédé selon la revendication 12 ou 13, dans lequel le système (10) est divisé en zones avec une voie de raccordement sensiblement longue en fonction de la longueur des voies de raccordement entre le point d'assemblage central (20) et les différentes positions d'agencement de conteneur, dans lequel l'attribution d'une position d'agencement à un conteneur arrivant est réalisée en fonction, entre autres, de ces zones.
